# EUROPÄISCHE PATENTSCHRIFT

(11) **EP 1 496 283 B1**
(45) Veröffentlichungstag und Bekanntmachung des Hinweises auf die Patenterteilung: **01.10.2008**
(21) Anmeldenummer: 04015644.0
(22) Anmeldetag: 02.07.2004
(51) Int. Cl.: F16D 66/00, F16D 65/092

(54) **Bremsbelag-Verschleisserfassungseinrichtung**
Brakepad wear detection device
Dispositif de détéction d'usure pour garniture de frein

(30) Priorität: 11.07.2003 DE 10331734
(43) Veröffentlichungstag der Anmeldung: 12.01.2005
(73) Patentinhaber: BPW Bergische Achsen KG, 51656 Wiehl (DE); TMD Friction Europe GmbH, 51381 Leverkusen (DE)
(72) Erfinder: Köchl, Hans-Ulrich, 51674 Wiehl (DE); Braunöhler, Udo, 51674 Wiehl (DE); Hogenkamp, Wolfgang, 42855 Remscheid (DE); Komor, Henryk, 51375 Leverkusen (DE); Schlinge, Berthold, 48703 Stadtlohn (DE); Brecht, Jörg Dr., 51519 Odenthal (DE); Zimmermann, Jörg, 51061 Köln (DE); Dohle, Achim, 51375 Leverkusen (DE); Rothmann, Werner, 45134 Essen (DE)
(74) Vertreter: Christophersen & Partner

(56) Entgegenhaltungen:
- EP-A- 0 032 071
- EP-A- 0 545 063
- EP-A- 0 754 875
- EP-A- 1 045 164
- FR-A- 2 689 588

## Beschreibung

Die Erfindung betrifft eine Bremspad-Verschleißerkennung mit einem in das Material des Reibbelag des Bremspads eingebetteten und im Bremsbetrieb zugleich mit dem Reibbelag abtragbaren Stromleiter, welcher über zum Zwecke des Bremspadwechsels trennbare elektrische Kontaktelemente mit einer Auswerteeinrichtung verbindbar ist.

Bei den heute z. B. für Lkw-Anhänger und -Auflieger eingesetzten Scheibenbremsen ist eine einfache Kontrolle des Zustandes der Bremspads durch Sichtprüfung nicht ohne weiteres möglich, da die Bremspads nicht einfach einsehbar sind und zudem eine nur optische Sichtkontrolle ohne entsprechende Hilfsmittel ein unsicheres und ungenaues Kontrollverfahren für den Abnutzungszustand der Bremspads sind. Aus dem Stand der Technik wie z. B. der DE 24 50 761 A1 oder der DE 35 02 053 C2 sind daher bereits auf Distanz arbeitende Systeme zur Verschleißerkennung mit den eingangs angegebenen Merkmalen bekannt. Sensorische Elemente wie z. B. Widerstandsdrähte erfassen den Bremsbelagverschleiß in jedem einzelnen der Bremspads und geben bei Unterschreiten einer kritischen Belagdicke ein Signal ab, wozu die Sensorikelemente über elektrische Kabel mit einer entsprechenden Auswerteeinrichtung verbunden sind. Um trotz dieser elektrischen Verbindung die Bremspads auswechseln zu können, sind bei der DE 24 50 761 A1 die elektrischen Kabel aus der Belagträgerplatte des Bremspads herausgeführt und an ihren Enden mit Steckkontakten versehen, welche sich mit korrespondierend ausgebildeten Steckkontakten der zu der Auswerteeinrichtung führenden elektrischen Leitung verbinden lassen. Jedoch ist die Herstellung eines solchen Bremspads teuer und aufwendig. Die Belagträgerplatte des Bremspads ist für die Durchführung des Anschlußkabels mit zusätzlichen Aussparungen und Bohrungen versehen. Für einen vollautomatischen Fertigungsprozeß nachteilig ist das aus der Belagträgerplatte heraushängende Kabelende mit den daran befestigten Kontaktsteckern.

Der Erfindung liegt daher die **Aufgabe** zugrunde, eine Verschleißerkennung für Bremspads von Scheiben- oder Trommelbremsen zu schaffen, die aus wenigen Einzelteilen besteht und im Rahmen der üblichen Fertigung von Bremspads kostengünstig darin integrierbar ist.

Zur **Lösung** dieser Aufgabe wird bei einer Bremspad-Verschleißerkennung der eingangs genannten Art vorgeschlagen, daß das reibbelagseitige elektrische Kontaktelement in dem Reibbelag angeordnet ist.

Bei der Erfindung ist daher nicht nur das Sensorikelement, sondern zusätzlich auch das reibbelagseitige elektrische Kontaktelement der auftrennbaren elektrischen Verbindungsleitung in den Reibbelag integriert. Auf diese Weise besteht die Möglichkeit, bereits beim Herstellen des Reibbelages die Elemente der Verschleißerkennung darin zu integrieren, vorzugsweise durch Einbetten in den Reibwerkstoff des Reibbelages. Zur Herstellung der Signalverbindung mit der Auswerteeinrichtung ist insbesondere auch das reibbelagseitigte elektrische Kontaktelement in den Reibbelag integriert, wozu dieses z.B. in einer Öffnung in der Außenfläche des Reibbelags angeordnet sein kann. Vorzugsweise befindet sich das Kontaktelement an einer der Schmalseiten des Reibbelags, wobei diese Schmalseite im wesentlichen rechtwinklig zur Reibfläche des Reibbelags angeordnet ist. Die Signalübertragung an dieser Stelle ist in baulicher Hinsicht sehr günstig, außerdem wird die im Bremsbetrieb erforderliche Zustellbewegung des Bremspads im Bremssattel nicht behindert. Bremsseitig besteht die Verschleißerkennung aus sehr wenigen Einzelteilen, die außerdem im Rahmen der üblichen Fertigung von Bremspads besonders kostengünstig darin integrierbar sind. Da sich die bremsseitigen Elemente der Verschleißerkennung in dem Reibbelag befinden, sind keine konstruktiven Anpassungen oder Änderungen an der Belagträgerplatte des Bremspads erforderlich.

In fertigungstechnischer Hinsicht bietet die erfindungsgemäße Bremspad-Verschleißerkennung den zusätzlichen Vorteil, daß bei der automatischen Massenfertigung derartiger Bremspads in ein- und derselben Fertigungslinie sowohl Bremspads mit der erfindungsgemäßen Verschleißerkennung gefertigt werden können, wie auch herkömmliche Bremspads. Die Belagträgerplatte ist in beiden Fällen dieselbe, die Unterschiede bestehen lediglich im Reibbelag, der im einen Fall die zusätzlichen Bauteile für die Verschleißerkennung enthält, und im anderen Fall nicht. Auf die eigentliche Herstellung des Reibbelages durch das sogenannte Backen des verwendeten Reibwerkstoffes hat dies jedoch keinen Einfluß, vielmehr kann auch dieser Fertigungsschritt in beiden Fällen in gleicher Weise ablaufen.

Für eine besonders kostengünstige Lösung unter Beschränkung auf wenige Einzelteile wird vorgeschlagen, daß das reibbelagseitige Kontaktelement das freie Ende des Stromleiters selbst ist. Zusätzliche Bauteile wie z. B. ein mit dem Stromleiter verbundener separater Steckkontakt werden auf diese Weise vermieden.

In Bezug auf das auswerteseitige elektrische Kontaktelement wird vorgeschlagen, daß dieses eine Metallspitze ist, und daß das reibbelagseitige elektrische Kontaktelement gegenüber der Metallspitze nachgiebig ausgebildet ist. Über eine solche Nachgiebigkeit verfügt z. B. ein aus einem Bündel von Litzen zusammengesetzter elektrischer Stromleiter, in dessen freies Ende sich die Metallspitze unter Kontaktherstellung hineinstechen läßt, wobei die Litzenenden geringfügig aufspleißen.

Mit einer weiteren Ausgestaltung der Erfindung wird vorgeschlagen, daß der Stromleiter parallel zu der Belagträgerplatte verläuft, wobei seine der Belagträgerplatte abgewandte Außenseite einen Abstand zu der Belagträgerplatte aufweist, der der maximal zulässigen Restdicke des Reibbelages entspricht.

Mit einer weiteren Ausgestaltung wird vorgeschlagen, daß der Stromleiter innerhalb des Materials des Reibbelages eine Schlaufe bildet, deren beiden Enden die reibbelagseitigen Kontaktelemente bilden. Vorzugsweise ist diese Schlaufe Bestandteil eines geschlossenen Stromkreises, bei dessen Unterbrechung infolge des beim Bremsprozeß stattfindenden Mitabtragens des Stromleiters der Stromfluß unterbrochen wird, was innerhalb der Auswerteeinrichtung zu einer entsprechenden Signalabgabe führt.

Gattungsgemäße Bremspads können in der Weise gestaltet sein, daß sich von der Belagträgerplatte Stifte in den Reibbelag hineinerstrecken, um ein Abscheren des Reibbelages von der Belagträgerplatte zu verhindern. Bei einem solcher Art gestalteten Bremspad wird mit einer weiteren Ausgestaltung vorgeschlagen, daß der Stromleiter an einem auf einen der Stifte aufgesetzten Ring aus elektrisch nicht leitendem Material befestigt ist, der sich auf der dem Reibbelag zugewandten Flachseite der Belagträgerplatte abstützt. Hierdurch wird die positionsgenaue Einbettung des Stromleiters in den Reibwerkstoff wesentlich vereinfacht, da der vorzugsweise aus Kunststoff bestehende Ring die exakte Lage des Stromleiters solange sicherstellt, bis dieser vollständig von dem aushärtenden Reibwerkstoff umschlossen ist. Vorzugsweise ist in diesem Fall der Stromleiter auf einem Teil seiner Länge in das Material des vorzugsweise aus Kunststoff bestehenden Rings eingebettet.

Gemäß einer bevorzugten Ausgestaltung der Erfindung sind die auswerteseitigen elektrischen Kontaktelemente an einer sich entlang der Schmalseite des Reibbelags erstreckenden Platte oder Brücke angeordnet, die in Richtung auf den Reibbelag federbelastet ist. Hierdurch wird selbst im oftmals von starken Erschütterungen geprägten Fahrbetrieb ein sicherer elektrischer Kontakt zwischen den reibbelagseitigen und den auswerteseitigen Kontaktelementen erreicht.

Um eine dauernde Federkraft auf die die Kontakte tragende Brücke sicherzustellen, kann in vorteilhafter Weise die bei einer Scheibenbremse ohnehin vorhandene Belaghaltefeder, welche die Lage des Bremspads innerhalb des Bremssattels sichert, herangezogen werden. Vorgeschlagen wird daher, daß sich die Belaghaltefeder mit einem ihrer Federschenkel an der Außenseite der Brücke abstützt, und sie auf diese Weise die Federbelastung der Platte bzw. Brücke bewirkt.

Schließlich wird mit einer weiteren Ausgestaltung vorgeschlagen, daß der als Sensorikelement eingesetzte Stromleiter mindestens teilweise aus einem temperaturabhängig seinen Widerstandswert ändernden Material besteht, z. B. ein Konstantandraht ist. Gemäß dieser Ausgestaltung wird die erfindungsgemäße Verschleißerkennung zusätzlich dazu herangezogen, die Temperatur des Reibbelages nahe der Belagträgerplatte zu erfassen. Hierdurch kann einerseits das Temperaturniveau bereits im Fertigungsprozeß überwacht werden. In gleicher Weise läßt sich die Temperaturerfassung jedoch auch im Fahrbetrieb einsetzen, um so Aussagen über den Belastungszustand der Scheiben- oder Trommelbremse zu gewinnen.

Weitere Vorteile und Merkmale der Erfindung ergeben sich aus den nachfolgenden Beschreibung eines Ausführungsbeispieles anhand der zugehörigen Figuren. Darin zeigen:
- Fig. 1: Die Ansicht eines im Bremssattel einer Fahrzeug-Scheibenbremse angeordneten Bremspads mit in zwei Alternativen dargestellten Elementen einer Verschleißerkennung, wobei aus Gründen der Übersicht von dem Bremspad nur die Belagträgerplatte und der darauf angeordnete Reibbelag nur strichliniert dargestellt ist;
- Fig. 2: einen Schnitt durch Fig. 1 entlang der dort eingezeichneten Schnittlinie II-II unter zusätzlicher Darstellung auch des Reibbelags und
- Fig. 3: eine der Fig. 2 entsprechende Darstellung, jedoch in deutlich größerem Maßstab;
- Fig. 4: Die Ansicht eines Bremspads mit Elementen einer Verschleißerkennung, wobei aus Gründen der Übersicht von dem Bremspad nur die Belagträgerplatte und der darauf angeordnete Reibbelag nur strichliniert dargestellt ist.

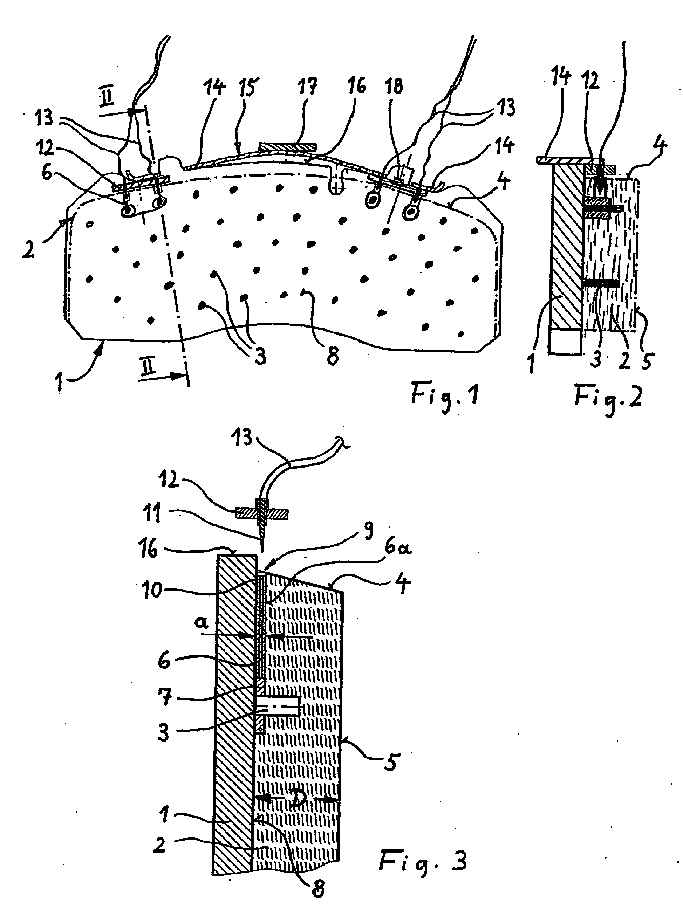

Die Zeichnung zeigt einen Bremspad zur Verwendung im Bremssattel einer Scheibenbremse, vorzugsweise der Scheibenbremse eines Lkw-Anhängers oder - Aufliegers. Dargestellt in Fig. 1 ist die Belagträgerplatte 1, auf der sich, dem Betrachter zugewandt, der Reibbelag aus einem für die Herstellung derartiger Bremspads üblichen Reibwerkstoff befindet. Aus Gründen der Übersicht, nämlich der besseren Erkennbarkeit der Belagträgerplatte 1, ist in Fig. 1 der Reibbelag nur durch eine Strichlinie angedeutet. In Fig. 2 hingegen, bei der es sich im übrigen um einen Schnitt durch die Gegenstände nach Fig. 1 entlang der Schnittebene II-II handelt, ist zusätzlich zu der Belagträgerplatte 1 auch der Reibbelag 2 dargestellt.

Im Bremsbetrieb nutzt sich der Reibbelag 2 zunehmend ab, wodurch sich seine ursprüngliche Dicke D bis auf eine Restdicke reduziert, bei deren Erreichen der Bremspad gegen einen neuen Bremspad ausgetauscht werden muß. Aufgabe der hier beschriebenen Bremspad-Verschleißerkennung ist es daher, einen solchen Zustand des maximalen Abnutzungsgrades des Reibbelages 2 zu erkennen und das Erreichen dieses Zustandes mittels der Auswerteeinrichtung in geeigneter Weise kenntlich zu machen, z. B. durch ein dem Fahrer des Fahrzeuges übermitteltes akustisches oder optisches Signal.

In der bei Bremspads üblichen Weise ist die Belagträgerplatte 1 mit in Richtung auf den Reibbelag 2 sich erstreckenden Stiften 3 versehen, welche über die gesamte Fläche der Belagträgerplatte 1 verteilt sind. In der Regel sind die Stifte 3 mit der Belagträgerplatte 1 verschweißt. Die Stifte 3 sind, nachdem der Reibbelag 2 auf die Belagträgerplatte 1 aufgebracht wird, in dem Material des Reibbelages 2 eingebettet. Hierdurch ergibt sich ein Formschluß zwischen Belagträgerplatte und Reibbelag, was ein Abscheren des Reibbelages von der Belagträgerplatte bei hoher Bremsbelastung verhindert. Diese Stifte werden, wie später noch darzustellen sein wird, für die Lagefixierung der erfindungsgemäßen Verschleißerkennung herangezogen.

Die Herstellung derartiger Bremspads erfolgt üblicherweise durch ein sogenanntes "Backen" des Materials des Reibbelages 2 auf die vorhandene und bereits mit den Stiften 3 bestückte Belagträgerplatte 1. Der Prozeß des Formens und Aushärtens des Reibbelages 2 erfolgt in einem Formwerkzeug, dessen Querschnitt dem später erzielten Querschnitt des Reibbelages 2 mit den typischen, zwecks besserer Entformbarkeit leicht angeschrägten Schmalseiten 4 des Reibbelages 2 entspricht. Diese Schmalseiten 4 stehen daher im wesentlichen rechtwinklig zu jener Reibfläche 5, mit der sich der Bremspad im Bremsbetrieb gegen die Bremsscheibe der Fahrzeug-Scheibenbremse abstützt.

Während des vorbeschriebenen "Backens", d. h. Formens und Aushärtens des Reibbelages 2 auf der vorhandenen Belagträgerplatte 1, werden zusätzlich auch die nachfolgend im einzelnen beschriebenen Teile der Bremspad-Verschleißerkennung mit eingeformt, indem diese Teile in das Material des Reibbelages 3 ortsfest eingebettet werden.

Bei der in dem linken Teil der Fig. 1 dargestellten Ausführungsform ist ein schlaufenförmig gestalteter Stromleiter 6 in das Material des Reibbelages 2 eingebettet. Bei dem Stromleiter 6 kann es sich um einen einfachen Metalldraht oder auch Widerstandsdraht handeln, der innerhalb einer Ebene parallel zu der Belagträgerplatte 1 liegt. Die Distanz a zwischen der Außenseite 6a des Stromleiters 6 und der Verbindungsebene 8 zwischen Belagträgerplatte 1 und Reibbelag 2 ist gleich jener Restdicke des Reibbelages, bei deren Erreichen der Bremspad gegen einen neuen Bremspad ausgetauscht werden muß. Um den Stromleiter 6 während der Herstellung des Reibbelages 2 exakt unter Einstellung der Distanz a zu fixieren, wird als Hilfsmittel ein insbesondere in Fig. 3 erkennbarer Ring 7 aus Kunststoff verwendet. Der Stromleiter 6 ist auf einem Teil seiner Länge in das Kunststoffmaterial des Rings 7 eingebettet, der Ring selbst ist auf einen der Stifte 3 aufgesetzt und umschließt diesen. Ferner stützt sich der Ring 7 an der dem Reibbelag 2 zugewandten Flachseite 8 der Belagträgerplatte 1 ab. Durch entsprechende Dimensionierung der Dicke des Rings 7 ist daher der für die Verschleißerkennung wichtige Abstand a vorläufig sichergestellt, so daß bei dem anschließenden Einbetten von Ring 7 und Stromleiter 6 in das aushärtende Material des Reibbelages 2 sich die Lage des Stromleiters 6 nicht mehr ändert.

Die bei der ersten Ausführungsform (links in Fig. 1) zwei Enden des schlaufenförmigen Stromleiters 6 enden in Öffnungen 9 an der Schmalseite 4 des Reibbelages 2. Die Öffnungen 9 weisen ebenfalls den bereits beschriebenen Abstand zu der Trennebene 8 zwischen Belagträgerplatte 1 und Reibbelag 2 auf. In der technisch einfachsten Ausgestaltung sitzt in der Öffnung 9 lediglich das unbearbeitete freie Ende des Stromleiters 6 selbst. Dieses Ende bildet daher ein von außen zugängliches Kontaktelement 10. Alternativ ist es auch möglich, an den Enden des schlaufenförmigen Stromleiters 6 jeweils zusätzliche Kontaktbuchsen oder Kontaktstecker anzubringen, die dann das reibbelagseitige Kontaktelement 10 bilden. Zur Aufnahme derartiger Kontaktbuchsen oder Stecker muß die Öffnung 9 in der Schmalseite 4 des Reibbelages etwas vergrößert werden.

Die Herstellung der zum Zwecke des Bremspadwechsels lösbaren elektrischen Verbindung zu der an anderer Stelle in dem Fahrzeug angeordneten Auswerteeinrichtung erfolgt über Gegenkontakte. Hierzu zeigt Fig. 3 ein auswerteseitiges Kontaktelement 11 in Gestalt einer Metallspitze, die sich von außen her in das reibbelagseitige Kontaktelement 10 einstechen läßt um so die elektrische Verbindung zu bewirken. Bei dieser Technik des Einstechens des Kontaktelementes 11 in das Kontaktelement 10 ist es von Vorteil, wenn das reibbelagseitige Kontaktelement 10 aus einem nachgiebigen, elektrisch leitenden Material besteht. Ist der Stromleiter z. B. ein aus mehreren einzelnen Litzen zusammengesetzt, so kann die Metallspitze des Kontaktelementes 11 zwischen die Enden der Litzen eindringen, wobei diese geringfügig aufspleißen. Die Herstellung wie auch die Trennung der elektrischen Verbindung erfolgt daher mit einfachen technischen Mitteln, die zudem besonders einfach herstellbar sind. Dies ist deshalb von besonderer Bedeutung, da es sich bei den erfindungsgemäßen Bremspads um Verschleißteile handelt, die über die Betriebsdauer des Fahrzeuges häufig ausgetauscht werden müssen.

Gemäß der in den Fign. 1 und 2 dargestellten Ausführungsform befinden sich die auswerteseitigen Kontaktelemente 11 an einer gemeinsamen Brücke 12, die sich parallel zu der Schmalseite 4 des Reibbelages erstreckt, und die in Richtung auf den Reibbelag 2 federbelastet ist. Die Schmalseite 4 ist jene Schmalseite des Bremspads, welche, bezogen auf die Drehachse der Scheibenbremse, nach außen weist. Die Brücke 12 ist eine Platte, vorzugsweise leicht gebogen und aus Kunststoff bestehend, in welcher getrennt voneinander die Metallspitzen der Kontaktelemente 11 befestigt sind. Von der Brücke 12 führen flexible elektrische Kabel 13 zu der an anderer Stelle in dem Fahrzeug angeordneten Auswerteeinrichtung.

Da die Brücke 12 in Richtung auf den Reibbelag federbelastet ist, werden die daran angeordneten Kontaktelemente 11 gegen die reibbelagseitigen Kontaktelemente 10 gedrückt, so daß auch während der betriebsgemäßen Zustellbewegung des Bremspads die jederzeitige elektrische Verbindung gewährleistet ist. Zur Erzielung der Federbelastung der Brücke 12 stützt sich diese mit ihrer Außenseite gegen den Federschenkel 14 einer Belaghaltefeder 15 ab. Derartige Belaghaltefedern 15 sind bei Scheibenbremsen üblich, sie drücken radial von außen her auf den Bremspad, wobei üblicherweise der Federschenkel 14 der Belaghaltefeder 15 an dem Außenrand 16 der Belagträgerplatte 1 anliegt. Dieses unmittelbare Anliegen wird im vorliegenden Fall dahingehend modifiziert, daß sich die Belaghaltefeder 15 nicht nur gegen die Belagträgerplatte abstützt, sondern die Abstützung auch auf die Platte bzw. Brücke 12 wirkt, die sich wiederum über die Kontaktelemente 11, 10 an dem Reibbelag 2 abstützt. Die beim Stand der Technik ohnehin vorhandene Belaghaltefeder 15 übernimmt daher zusätzlich die Aufgabe, mittels der Brücke 12 die Kontaktelemente 10, 11 in dauernder elektrischer Verbindung zu halten. In Fig. 1 dargestellt ist noch ein mittig zwischen den beiden Federschenkeln 14 der Belaghaltefeder 15 angeordneter Belaghaltebügel 17, welcher starr gegenüber dem Bremssattel ausgebildet ist und die erforderliche Vorspannung der Belaghaltefeder 15 erzeugt.

In dem rechten Teil der Fig. 1 ist eine abgewandelte Ausführungsform dargestellt. Hierbei bildet der Stromleiter 6 keine Schlaufe, vielmehr reichen die Litzen des Stromleiters 6 von der Schmalseite 4 des Reibbelages 2 her bis zu jeweils einem der Lagefixierung bei der Herstellung dienenden Ring 7. Die vollständige Schließung des Stromkreises erfolgt bei dieser Ausführungsform, sobald durch entsprechende Abnutzung des Reibbelages 2 die zwei Stromleiter 6 in Verbindung mit der aus Metall bestehenden Bremsscheibe der Scheibenbremse gelangen. Nicht eine Unterbrechung des Stromkreises führt daher zu einer Signalabgabe, sondern das vollständige Schließen des Stromkreises. Die Überbrückung der auf der Brücke 12 angeordneten Kontaktelemente 11 erfolgt über einen elektrischen Widerstand 18, so daß ein Kontrollstromkreis über den elektrischen Widerstand 18 jederzeit geschlossen ist.

Alternativ kann die Herstellung des eine Warnung auslösenden Kontaktes auch erfolgen, indem der an den Pluspol angeschlossene, in diesem Fall einfache Stromleiter 6 die gegenüber dem Minuspol gepolte Bremsscheibe kontaktiert.

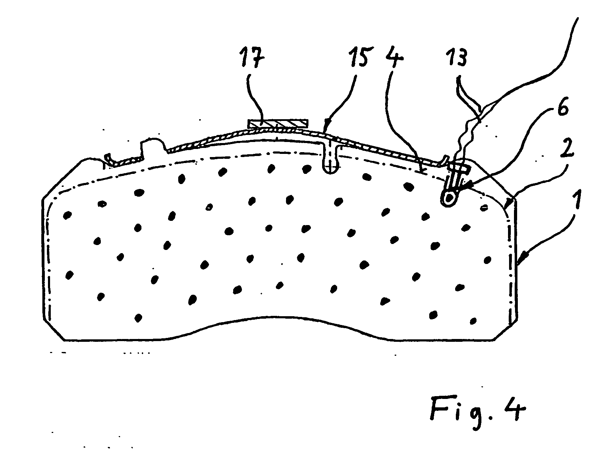

In Fig. 4 ist ein anderer Bremspad dargestellt, der ebenfalls über eine Verschleißerkennung verfügt. Hierzu ist der in Fig. 4 wiederum strichliniert dargestellten Reibbelag 2 eine Öffnung angeordnet. Die Öffnung befindet sich wiederum an der nach außen weisenden Schmalseite 4 des Reibbelags 2. In die auf diese Weise in dem Reibbelag ausgesparte Öffnung ist das Sensorikelement 4 von außen einsetzbar. Bei der Herstellung des Reibbelages 2 ist es daher nicht erforderlich, das Sensorikelement bereits darin einzubetten. Vielmehr wird nur die vorzugsweise sacklochartige Öffnung hergestellt, in die das über Kabel 13 mit der Auswerteeinrichtung verbundene Sensorikelement 6 dann erst nach erfolgter Montage des Bremspads eingesetzt wird.

### Bezugszeichenliste

- 1: Belagträgerplatte
- 2: Reibbelag
- 3: Stift
- 4: Schmalseite
- 5: Reibfläche des Reibbelages
- 6: Stromleiter, Sensorikelement
- 6a: Außenseite des Stromleiters
- 7: Ring
- 8: Flachseite
- 9: Öffnung
- 10: Kontaktelement, reibbelagseitig
- 11: Kontaktelement, auswerteseitig
- 12: Brücke, Platte
- 13: Kabel
- 14: Federschenkel
- 15: Belaghaltefeder
- 16: Außenrand
- 17: Belaghaltebügel
- 18: elektrischer Widerstand

- a: Abstand
- D: Dicke

## Patentansprüche

1. Bremspad-Verschleißerkennung mit einem in das Material des Reibbelags (2) des Bremspads eingebetteten und im Bremsbetrieb zugleich mit dem Reibbelag abtragbaren Stromleiter (6), welcher über zum Zwecke des Bremspadwechsels trennbare elektrische Kontaktelemente (10, 11) mit einer Auswerteeinrichtung verbindbar ist,
**dadurch gekennzeichnet,**
**daß** das reibbelagseitige elektrische Kontaktelement (10) in dem Reibbelag (2) angeordnet ist.

2. Bremspad-Verschleißerkennung nach Anspruch 1, **dadurch gekennzeichnet, daß** sich das Kontaktelement (10) an einer Schmalseite (4) des Reibbelags (2) befindet, die im wesentlichen rechtwinklig zur Reibfläche (5) des Reibbelags angeordnet ist.

3. Bremspad-Verschleißerkennung nach Anspruch 2, **dadurch gekennzeichnet, daß** das Kontaktelement (10) in einer Öffnung (9) in der Schmalseite (4) des Reibbelags (2) sitzt.

4. Bremspad-Verschleißerkennung nach einem der Ansprüche 1 bis 3, **dadurch gekennzeichnet, daß** das reibbelagseitige Kontaktelement (10) das freie Ende des Stromleiters (6) selbst ist.

5. Bremspad-Verschleißerkennung nach einem der Ansprüche 1 bis 4, **dadurch gekennzeichnet, daß** das auswerteseitige elektrische Kontaktelement (11) eine Metallspitze ist, und daß das reibbelagseitige elektrische Kontaktelement (10) gegenüber der Metallspitze nachgiebig ausgebildet ist.

6. Bremspad-Verschleißerkennung nach einem der vorangehenden Ansprüche, **dadurch gekennzeichnet, daß** der Stromleiter (6) parallel zu der Belagträgerplatte (1) verläuft, wobei seine der Belagträgerplatte (1) abgewandte Außenseite (6a) einen Abstand (a) zu der Belagträgerplatte (1) aufweist, der der maximal zulässigen Restdicke des Reibbelags (2) entspricht.

7. Bremspad-Verschleißerkennung nach Anspruch 6, **dadurch gekennzeichnet, daß** der Stromleiter (6) eine Schlaufe bildet, deren beiden Enden die reibbelagseitigen Kontaktelemente (10) bilden.

8. Bremspad-Verschleißerkennung nach Anspruch 6 oder Anspruch 7, **dadurch gekennzeichnet, daß** sich in an sich bekannter Weise Stifte (3) von der Belagträgerplatte (1) in den Reibbelag (2) hinein erstrecken, und daß der Stromleiter (6) an einem auf einem der Stifte (3) aufgesetzten Ring (7) aus elektrisch nicht leitendem Material befestigt ist, der sich auf der dem Reibbelag (2) zugewandten Flachseite (8) der Belagträgerplatte (1) abstützt.

9. Bremspad-Verschleißerkennung nach Anspruch 8, **dadurch gekennzeichnet, daß** der Stromleiter (6) auf einem Teil seiner Länge in das Material, vorzugsweise Kunststoffmaterial, des Rings (7) eingebettet ist.

10. Bremspad-Verschleißerkennung nach einem der Ansprüche 2 bis 9, **dadurch gekennzeichnet, daß** die auswerteseitigen elektrischen Kontaktelemente (11) an einer sich entlang der Schmalseite (4) des Reibbelags (2) erstreckenden und in Richtung auf den Reibbelag (2) federbelasteten Brücke (12) angeordnet sind.

11. Bremspad-Verschleißerkennung nach Anspruch 10, **dadurch gekennzeichnet, daß** sich eine die Lage des Bremspads sichernde Belaghaltefeder (15) mit einem ihrer Federschenkel (14) an der Außenseite der Brücke (12) abstützt.

12. Bremspad-Verschleißerkennung nach einem der vorangehenden Ansprüche, **dadurch gekennzeichnet, daß** der Stromleiter (6) mindestens teilweise aus einem temperaturabhängig seinen Widerstandswert ändernden Material besteht.

## Claims

1. Brake pad wear detection device comprising a current conductor (6) which is embedded in the material of the friction lining (2) of the brake pad and can be abraded at the same time as the friction lining during the braking operation, which current conductor can be connected to an evaluation device via electrical contact elements (10, 11) which can be separated for the purpose of changing the brake pad, **characterised in that** the electrical contact element (10) on the friction lining side is arranged in the friction lining (2).

2. Brake pad wear detection device according to claim 1, **characterised in that** the contact element (10) is located on a narrow side (4) of the friction lining (2) which is arranged substantially at a right angle to the friction surface (5) of the friction lining.

3. Brake pad wear detection device according to claim 2, **characterised in that** the contact element (10) is seated in an opening (9) in the narrow side (4) of the friction lining (2).

4. Brake pad wear detection device according to one of claims 1 to 3, **characterised in that** the contact element (10) on the friction lining side is the free end of the current conductor (6) itself.

5. Brake pad wear detection device according to one of claims 1 to 4, **characterised in that** the electrical contact element (11) on the evaluation side is a metal spike, and **in that** the electrical contact element (10) on the friction lining side is designed to yield with respect to the metal spike.

6. Brake pad wear detection device according to one of the preceding claims, **characterised in that** the current conductor (6) runs parallel to the lining support plate (1), wherein its outer side (6a) facing away from the lining support plate (1) is at a distance (a) from the lining support plate (1) which corresponds to the maximum permissible remaining thickness of the friction lining (2).

7. Brake pad wear detection device according to claim 6, **characterised in that** the current conductor (6) forms a loop, the two ends of which form the contact elements (10) on the friction lining side.

8. Brake pad wear detection device according to claim 6 or claim 7, **characterised in that** pins (3) extend from the lining support plate (1) into the friction lining (2) in a manner known per se, and **in that** the current conductor (6) is attached to a ring (7) made of electrically nonconductive material which is placed onto one of the pins (3) and is supported on the flat side (8) of the lining support plate (1) facing towards the friction lining (2).

9. Brake pad wear detection device according to claim 8, **characterised in that** the current conductor (6), over part of its length, is embedded in the material, preferably the plastic material, of the ring (7).

10. Brake pad wear detection device according to one of claims 2 to 9, **characterised in that** the electrical contact elements (11) on the evaluation side are arranged on a bridge (12) which extends along the narrow side (4) of the friction lining (2) and is spring-loaded in the direction of the friction lining (2).

11. Brake pad wear detection device according to claim 10, **characterised in that** a lining retaining spring (15) which secures the position of the brake pad is supported by one of its spring legs (14) against the outer side of the bridge (12).

12. Brake pad wear detection device according to one of the preceding claims, **characterised in that** the current conductor (6) is made at least partially of a material which changes its resistance value as a function of the temperature.

## Revendications

1. Dispositif de détection d'usure pour garniture de frein, avec un conducteur électrique (6) enrobé dans le matériau de la garniture à friction (2) de la plaquette de frein et pouvant être usé pendant le freinage en même temps que la garniture à friction, conducteur qui peut être relié à un dispositif d'analyse au moyen d'éléments électriques de contact (10, 11) pouvant être débranchés pour changer la plaquette de frein,
**caractérisé en ce que** l'élément électrique de contact (10) côté garniture à friction est placé dans la garniture à friction (2).

2. Dispositif de détection d'usure pour garniture de frein selon la revendication 1, **caractérisé en ce que** l'élément de contact (10) se trouve sur un petit côté (4) de la garniture à friction (2), qui est placé pour l'essentiel perpendiculairement à la surface de frottement (5) de la garniture à friction.

3. Dispositif de détection d'usure pour garniture de frein selon la revendication 2, **caractérisé en ce que** l'élément de contact (10) se trouve dans une ouverture (9) dans le petit côté (4) de la garniture à friction (2).

4. Dispositif de détection d'usure pour garniture de frein selon l'une des revendications 1 à 3, **caractérisé en ce que** l'élément de contact (10) côté garniture à friction est lui-même l'extrémité libre du conducteur électrique (6).

5. Dispositif de détection d'usure pour garniture de frein selon l'une des revendications 1 à 4, **caractérisé en ce que** l'élément électrique de contact (11) côté analyse est une pointe métallique et **en ce que** l'élément électrique de contact (10) côté garniture à friction est réalisé flexible par rapport à la pointe métallique.

6. Dispositif de détection d'usure pour garniture de frein selon l'une des revendications précédentes, **caractérisé en ce que** le conducteur électrique (6) s'étend parallèlement à la plaque support de garniture (1), sa face extérieure (6a) opposée à la plaque support de garniture (1) présentant une distance (a) depuis la plaque support de garniture (1) qui correspond à l'épaisseur résiduelle maximale autorisée de la garniture à friction (2).

7. Dispositif de détection d'usure pour garniture de frein selon la revendication 6, **caractérisé en ce que** le conducteur électrique (6) forme une boucle dont les deux extrémités forment les éléments de contact (10) côté garniture à friction.

8. Dispositif de détection d'usure pour garniture de frein selon la revendication 6 ou la revendication 7, **caractérisé en ce que**, d'une manière connue en soi, des ergots (3) s'étendent à l'intérieur de la garniture à friction (2) depuis la plaque support de garniture (1), et **en ce que** le conducteur électrique (6) est fixé sur une bague (7) en matériau non conducteur électrique rapportée sur l'un des ergots (3), bague qui s'appuie sur la face plate (8) de la plaque support de garniture (1) tournée vers la garniture à friction (2).

9. Dispositif de détection d'usure pour garniture de frein selon la revendication 8, **caractérisé en ce que** le conducteur électrique (6) est enrobé sur une partie de sa longueur dans le matériau, de préférence une matière plastique, de la bague (7).

10. Dispositif de détection d'usure pour garniture de frein selon l'une des revendications 2 à 9, **caractérisé en ce que** les éléments électriques de contact (11) côté analyse sont placés sur un pont (12) s'étendant le long du petit côté (4) de la garniture à friction (2) et sollicité par un ressort en direction de la garniture à friction (2).

11. Dispositif de détection d'usure pour garniture de frein selon la revendication 10, **caractérisé en ce qu'**un ressort de maintien de garniture (15) garantissant la position de la plaquette de frein s'appuie avec l'une de ses branches (14) contre la surface extérieure du pont (12).

12. Dispositif de détection d'usure pour garniture de frein selon l'une des revendications précédentes, **caractérisé en ce que** le conducteur électrique (6) est composé au moins partiellement d'un matériau à résistance variable en fonction de la température.
